# EUROPÄISCHE PATENTANMELDUNG

(11) **EP 1 681 185 A2**
(43) Veröffentlichungstag der Anmeldung: **19.07.2006**
(21) Anmeldenummer: 06000371.2
(22) Anmeldetag: 10.01.2006
(51) Int. Cl.: B60G 17/02, B60G 15/06, F16F 15/02

(54) **Federträger**

(30) Priorität: 14.01.2005 DE 102005001735
(71) Anmelder: ZF FRIEDRICHSHAFEN AG, 88046 Friedrichshafen (DE)
(72) Erfinder: Münster, Martin, 88046 Friedrichshafen (DE); Mair, Ulrich, 88045 Friedrichshafen (DE)

(57) **Zusammenfassung**

Federträger, umfassend zwei zueinander axial bewegliche Baugruppen, mit einem ersten und einen zweitem Federteller, zwischen denen mindestens eine Feder angeordnet ist, wobei ein Federteller in seiner axialen Stellung zum anderen Federteller einstellbar ist, mit einem Schutzrohr, das nach radial innen einen Ringraum gegen äußere Einflüsse schützt, wobei der Federträger ein erstes Schutzrohr aufweist, das mit seinem einen Ende ortsfest mit einer Baugruppe und mit seinem anderen Ende mit dem verstellbaren Federteller verbunden ist, wobei sich ein zweites Schutzrohr in Richtung der anderen Baugruppe erstreckt.

## Beschreibung

Die Erfindung betrifft einen Federträger gemäß dem Oberbegriff von Patentanspruch 1.

Aus der gattungsbildenden DE 102 55 764 B3 ist ein Fahrzeugfahrwerk bekannt, dass einen Federträger mit zwei in Reihe angeordneten Federn aufweist. An einer Kolbenstange des Federträgers ist ein Aktuator in der Bauform eines E-Motors angeschlossen, der einen Federteller unter Zwischenschaltung einer Gewindespindel und einer Gewindemutter axial verschiebbar positioniert. Ein Schutzrohr in der Ausführung eines Faltenbalgs, der an einer Außenseite des Aktuatorgehäuses fixiert ist, hüllt die Gewindespindel und die beiden Federn vollständig ein, so dass des kein Schmutz in den vom Schutzrohr eingehüllten Ringraum eindringen kann. Dadurch muss ein sehr langer Schutzbalg mit einem großen Innendurchmesser verwendet werden, der vergleichsweise leicht in Querrichtung einknicken kann, oder zur Vermeidung dieses Effektes, eine entsprechend große Wandstärke aufweisen muss.

Durch eine Axialverstellung des Federtellers wird ein Fahrzeugaufbauhorizontierung erreicht, wobei der verstellbare Federteller u. U. mit einer anderen Frequenz und Amplitude verstellt wird als ein Zylinder des Federträgers eine Federungsbewegung zu der Kolbenstange ausführt.

Aufgabe der vorliegenden Erfindung ist es, einen Federträger derart weiterzuentwickeln, dass die aus dem Stand der Technik bekannte Probleme und Nachteile behoben sind.

Erfindungsgemäß wird die Aufgabe dadurch gelöst, dass der Federträger ein erstes Schutzrohr aufweist, welches mit seinem einen Ende ortsfest mittelbar oder unmittelbar mit der Kolbenstange und mit seinem anderen Ende mit dem verstellbaren Federteller verbunden ist, und ein zweites Schutzrohr, welches sich in Richtung des Zylinders des Schwingungsdämpfers erstreckt, aufweist.

Der große Vorteil besteht darin, dass man bei zwei getrennten Schutzrohren jeweils Schutzrohre verwenden kann, die der jeweiligen Belastung angepasst sind. So wird das Schutzrohr, das zwischen der Baugruppe und dem verstellbaren Federteller angeordnet ist vergleichsweise kleinere Federweg ausführen müssen. In einer Phase, in der keine Verstellbewegung am Federteller vorgenommen wird, wird das erste Schutzrohr weder gestaucht noch ausgelängt, so dass die Belastung praktisch null ist.

Bei einer ersten Variante ist das zweite Schutzrohr mit seinem in Richtung des Zylinders des Schwingungsdämpfers weisenden Ende an einem die Kolbenstange einhüllenden Rohr das eine Glocke trägt, befestigt ist. Dadurch kann das zweite Schutzrohr sehr kurz ausgeführt sein

Alternativ kann das zweite Schutzrohr mit dem Zylinder des Schwingungsdämpfers verbunden sein.

Wenn das zweite Schutzrohr mit dem einhüllenden Rohr oder dem Zylinder verbunden ist, dann ist es als Faltenbalg ausgeführt.

Zusätzlich kann zwischen dem einhüllenden Rohr mit Glocke und dem Zylinder des Schwingungsdämpfers ein drittes Schutzrohr angeordnet sein. Man kann je nach Verschleiß innerhalb des Federträgers verschiedene Werkstoffe für die Schutzrohre einsetzen. Den größten schädigenden Einflüssen ist der Bereich des Federträgers in der Nähe eines Kraftfahrzeugrades ausgesetzt. Mit dem axial mehrfach unterteilten Schutzrohren kann z. B. das zweite oder das dritte Schutzrohr ausgetauscht werden, ohne dass der gesamte Federträger z. B. im oberen Bereich, der im Radkastenteil schlechter zugänglich ist, demontiert werden muss.

Des weiteren besteht die Möglichkeit, dass das zweite Schutzrohr als starrer Körper ausgeführt ist. Ein starrer Körper als Schutzrohr ist im Vergleich zu einem Schutzbalg deutlich kostengünstiger.

Damit die Wirkung des Schutzrohres verbessert wird, wird ein von dem zweiten Schutzrohr eingehüllter Ringraum mittels einer Dichtung abgedichtet. Dabei verschließt das die Kolbenstange einhüllende Rohr mit Glocke mit der Dichtung das zweite Schutzrohr endseitig.

Anhand der folgenden Figurenbeschreibung soll die Erfindung näher erläutert werden.

### Es zeigt:

- Fig.1: Federträger mit einem verstellbaren Federteller in einer unteren Endstellung
- Fig. 2: Federträger mit dem Federteller in einer oberen Endstellung
- Fig. 3: Federträger mit einem zweiten Schutzrohr in der Bauform eines Schutzbalges

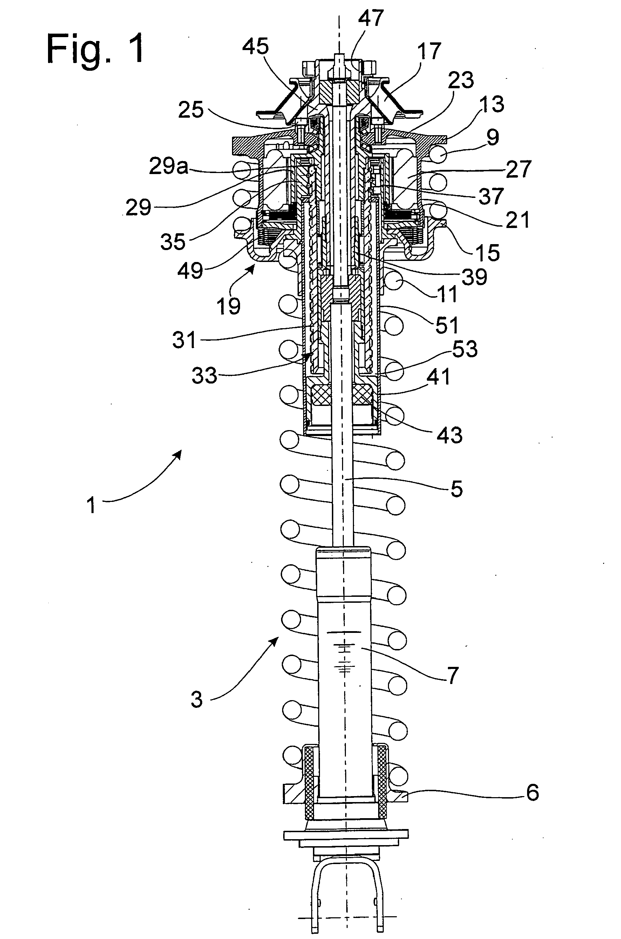

Die Figur 1 zeigt einen Federträger 1, der beispielsweise zwischen einer nichtdargestellten Fahrzeugachse und einem Fahrzeugaufbau angeordnet ist. Ein an sich bekannter Schwingungsdämpfer 3, der eine axial bewegliche Kolbenstange 5 in einem Zylinder 7 umfasst, wird von einer ersten und einer zweiten Feder 9; 11 eingehüllt. Die erste Feder 9 ist zwischen einem ersten Federteller 13 und einem zweiten Federteller 15 verspannt. Die zweite Feder 11 liegt an der Unterseite des zweiten Federtellers 15 und einem dritten Federteller 16 an, der optional an dem Zylinder 7 oder einem Achsteil der Fahrzeugachse befestigt ist. Der obere Federteller 13 ist über ein kardanisch bewegliches Kopflager 17 mit dem Fahrzeugaufbau verbunden. An diesem Kopflager ist ebenfalls ein Aktuator 19 in der Bauform eines E-Motors angeschlossen. Der Aktuator umfasst ein Gehäuse 21 mit einem Boden 23, der Befestigungsmittel 25 zum Kopflager aufweist, wobei der obere Federteller 13 mit dem Boden 23 einteilig ausgeführt ist. Aufgrund der gemeinsamen Anbindung des Bodens 23 und der Kolbenstange 5 mit dem Kopflager steht der obere Federteller 13 ortsfest zur Kolbenstange 5.

In dem Gehäuse 21 ist ein ringförmiger Stator 27 angeordnet, der einen Rotor 29 mit einem u-förmigen Querschnitt antreibt. Auf einem axial verlaufenden Schenkel 29a des Rotors 29 ist eine Gewindespindel 31 befestigt, die auf ihrer äußeren Mantelfläche ein Bewegungsgewinde 33 aufweist. In das Bewegungsgewinde 33 greift eine Gewindemutter 35 ein, die über eine Zwischenhülse 37 mit dem zweiten Federteller 15 in Wirkverbindung steht. In Abhängigkeit der Drehbewegung des Rotors und damit der Gewindespindel führt die Gewindemutter eine translatorische axiale Bewegung aus, die von dem zweiten Federteller 15 synchron mit ausgeführt wird, wodurch sich die Gesamttragkraft der beiden Federn 9; 11 einstellen lässt, um z. B. eine Wankbewegung des Fahrzeugaufbaus zu kompensieren.

Ausgehend vom Kopflager 17 erstreckt sich innerhalb der Gewindespindel ein die Kolbenstange einhüllendes Rohr, im weiteren Führungsrohr 39 genannt, das an seinem unteren Ende eine Glocke 41 trägt, in der ein Anschlagpuffer 43 eingespannt ist, der ab einer definierten Hublage des Schwingungsdämpfers 3 auf einer oberen Stirnfläche des Zylinders 7 zur Anlage kommt. Das Führungsrohr ist in Axialrichtung und in Umfangsrichtung ortsfest zur Kolbenstange gelagert, da ein Flansch 45 von den Befestigungsmitteln 25 zum Gehäuse des E-Motors durchdrungen wird und in einer topfförmigen Erweiterung 47 die Kolbenstange befestigt ist.

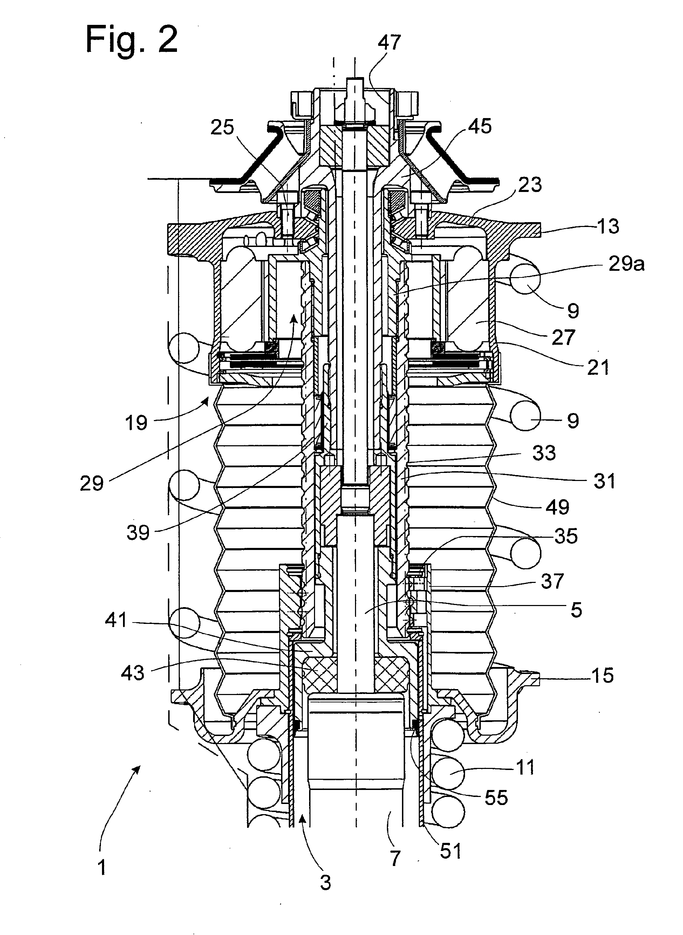

Die Gewindespindel 31 und die Gewindemutter werden bis zum zweiten Federteller 15 von einem Schutzrohr in der Bauform eines elastischen Schutzbalgs 49 eingehüllt, der endseitig an der Baueinheit Gewindemutter-Federteller befestigt ist. Das andere Ende setzt am Gehäuse 21 des E-Motors an. In der Fig. 1 befinden sich der zweite Federteller 15 und damit auch die Gewindemutter 35 in einer oberen Endstellung. Die Fig. 1 zeigt dasselbe Federbein 1 in einem Betriebszustand, bei dem der zweite Federteller 15 eine untere Endstellung auf der Gewindespindel 31 einnimmt. Der Schutzbalg 49 ist in dieser Federtellerposition maximal gestaucht. In der Fig. 2 ist der nahezu gestreckte Schutzbalg 49 in Verbindung mit einer unteren Endstellung des Federtellers 15 dargestellt.

In der Zusammenschau der Fig. 1 und 2 ist erkennbar, dass der Federträger neben dem ersten Schutzrohr 49, das mit seinem einen Ende an dem Gehäuse 21 des Aktuators und damit der ersten Baugruppe in Form der Kolbenstange 5 und mit seinem anderen Ende mit dem verstellbaren Federteller 15 verbunden ist, sich ein zweites Schutzrohr 51 ausgehend von dem verstellbaren Federteller in Richtung der anderen Baugruppe, nämlich dem Zylinder 7 erstreckt. Das zweite Schutzrohr ist als ein starrer Körper ausgeführt, der zur Kolbenstange 5 einen Ringraum 53 einhüllt, die mittels einer Dichtung 55, die z. B. in dem Führungsrohr 39 bzw. der sich daran anschließenden Glocke 41 befestigt ist, das zweite Schutzrohr 51 endseitig verschließt.

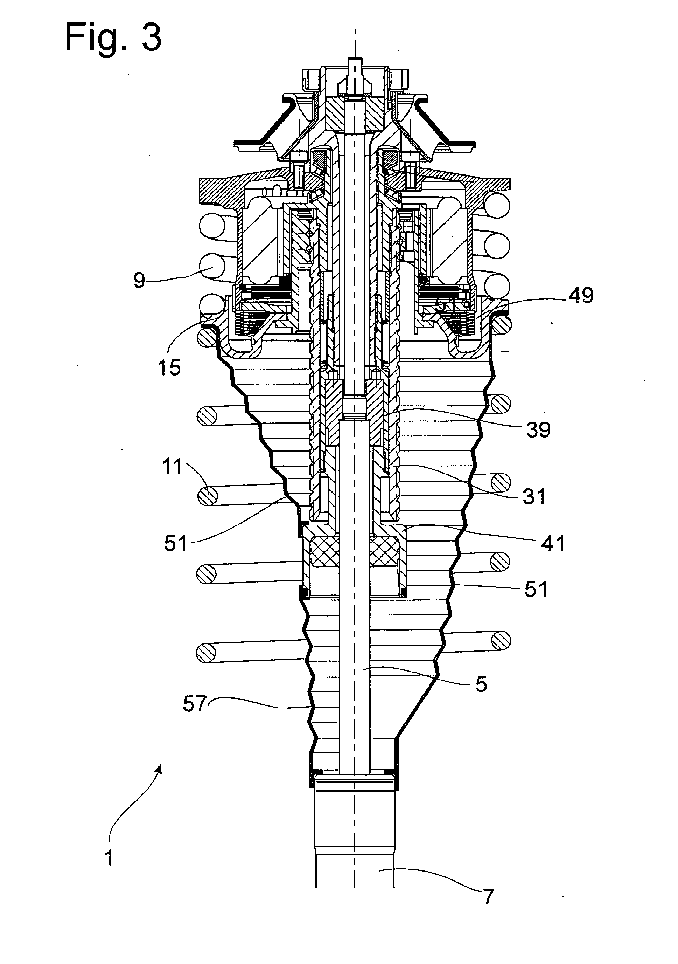

Die Fig. 3 enthält zwei Varianten eines zweiten Schutzrohres 51 für einen Federträger gemäß der Fig. 1. Generell wird in dieser Figur das zweite Schutzohr von einem elastischen Faltenbalg 51 gebildet. Im linken Halbschnitt ist das zweite Schutzrohr 51 mit seinem in Richtung des Zylinders 7 weisenden Ende an dem die Kolbenstange 5 einhüllenden Führungsrohr 39 bzw. der daran sich anschließenden Glocke 41 befestigt. Des weiteren ist zwischen dem einhüllenden Führungsrohr 39 und dem Zylinder ein drittes Schutzrohr 57 angeordnet. Jeder der drei Schutzrohre 49, 51; 57 unterliegt einer eigenen Belastung, so dass es durchaus sinnvoll sein kann, verschiedene Materialien für die drei Schutzrohre einzusetzen.

Im rechten Halbschnitt steht das zweite Schutzrohr 51 mit dem Zylinder 7 in Wirkverbindung. In dieser Ausführungsform wird die gesamte Gewindespindel 31 und der aus dem Zylinder 7 ragende Abschnitt der Kolbenstange 5 von dem Schutzrohr 51 abgedeckt. Die Auswahl, welche Variante eingesetzt wird, ist sehr stark abhängig von dem Fahrzeug, das mit den erfindungsgemäßen Federträgern bestückt werden soll.

## Patentansprüche

1. Federträger, umfassend zwei zueinander axial bewegliche Baugruppen, mit einem ersten und einen zweitem Federteller, zwischen denen mindestens eine Feder angeordnet ist, wobei ein Federteller in seiner axialen Stellung zum anderen Federteller einstellbar ist, mit einem Schutzrohr, das nach radial innen einen Ringraum gegen äußere Einflüsse schützt,
**dadurch gekennzeichnet,**
**dass** der Federträger (1) ein erstes Schutzrohr (49) aufweist, welches mit seinem einen Ende ortsfest mittelbar oder unmittelbar mit der Kolbenstange (5) und mit seinem anderen Ende mit dem verstellbaren Federteller (15) verbunden ist, und ein zweites Schutzrohr (51), welches sich in Richtung des Zylinders (7) des Schwingungsdämpfers (3) erstreckt, aufweist.

2. Federträger nach Anspruch 1,
**dadurch gekennzeichnet,**
**dass** das zweite Schutzrohr (51) mit seinem in Richtung des Zylinders (7) des Schwingungsdämpfers (3) weisenden Ende an einem die Kolbenstange (5) einhüllenden Rohr (39), das eine Glocke (41) trägt, befestigt ist.

3. Federträger nach Anspruch 1,
**dadurch gekennzeichnet,**
**dass** das zweite Schutzrohr (51) mit dem Zylinder (7) des Schwingungsdämpfers (3) verbunden ist.

4. Federträger nach Anspruch 1,
**dadurch gekennzeichnet,**
**dass** das zweite Schutzrohr (51) als Faltenbalg ausgeführt ist.

5. Federträger nach Anspruch 2,
**dadurch gekennzeichnet,**
**dass** zwischen dem einhüllenden Rohr (39) mit Glocke (41) und dem Zylinder (7) des Schwingungsdämpfers (3) ein drittes Schutzrohr (57) angeordnet ist.

6. Federträger nach Anspruch 2,
**dadurch gekennzeichnet,**
**dass** das zweite Schutzrohr (51) als starrer Körper ausgeführt ist.

7. Federträger nach Anspruch 2,
**dadurch gekennzeichnet,**
**dass** ein von dem zweiten Schutzrohr (51) eingehüllter Ringraum (53) mittels einer Dichtung (55) abgedichtet wird.

8. Federträger nach Anspruch 7,
**dadurch gekennzeichnet,**
**dass** das die Kolbenstange (5) einhüllende Rohr (39) mit Glocke (41) mit der Dichtung (55) das zweite Schutzrohr (51) endseitig verschließt.
